# EUROPEAN PATENT APPLICATION

(11) **EP 1 491 321 A2**
(43) Date of publication of application: **29.12.2004**
(21) Application number: 04076773.3
(22) Date of filing: 16.06.2004
(51) Int. Cl.: B29C 49/20, B29C 49/42, B29C 45/42, B29C 31/04

(54) **Process for manufacturing bottles having at least two components, and plant for its implementation**

(30) Priority: 24.06.2003 IT RE20030060
(71) Applicant: Bosi, Giovanni, 41100 Modena (IT)
(72) Inventor: Bosi, Giovanni, 41100 Modena (IT)
(74) Representative: Corradini, Corrado

(57) **Abstract**

Process for manufacturing bottles having at least two components, comprising the following stages: creating a tube of thermoplastic synthetic material; creating an insert of elastomeric thermoplastic material; inserting the tube and insert into a blow mould, and blow-moulding the bottle.

## Description

The present invention relates to the manufacture of plastic bottles for containing miscellaneous products, such as cosmetics, detergent, pharmaceutical and para-pharmaceutical products, and generally all products dispensable in the form of creams, liquids or fluid pastes.

Such bottles of the state of the art present an outer surface intended to receive labels, or inscriptions and decorations directly printed on the bottle, and are generally manufactured starting from an extruded tube subsequently treated by a blow-moulding process within a suitable mould. The need to apply generally flat labels to the bottle or to create inscriptions or decorations directly on the bottle means that at least a portion of the bottle must be cylindrical, or have a curvature suitable for label application or for decoration.

Said labels and decorations have only a decorative and communicative function, and in no way confer functional characteristics to the product. Moreover, when wetted, the material used for bottle manufacture becomes slippery and difficult to retain with the hands; this makes such bottles very uncomfortable to use if containing for example soapy liquids, and are used in showers or bath tubs.

There is therefore a considerable interest in the manufacture of bottles presenting inserts of different materials compatible with the constituent material of the bottle body, said insert possibly being of anti-slip material and carrying inscriptions or decorations or conferring particular aesthetic, functional or tactile characteristics, and participating in the actual structure of the container by the formation thereon of reliefs, designs, escutcheons and trademarks, sleeves, protuberances, etc. by copenetration of the blow-moulded base material into the outer covering using the force of the compressed air applied during the blowing stage.

The object of the present patent is to provide a process enabling said bottles to be manufactured without any limitation with regard to shape and the associated functional characteristics.

Said object is attained according to the invention by the process defined in the claims.

The characteristics of the invention will be more apparent from the ensuing detailed description of a preferred but non-limiting embodiment of a bottle manufacturing method, given with reference to the accompanying drawing.
Figure 1 is a schematic plan view of a manufacturing line for the bottle of the invention.
Figure 2 shows an enlarged part thereof.
Figure 3 shows the section III-III of Figure 2.
Figure 4 shows an enlarged portion of Figure 1.
Figure 5 shows the section V-V of Figure 4.
Figure 6 shows the end portion of the line of Figure 1.
Figure 7 shows the section VII-VII of Figure 4.
Figure 8 is a perspective view of the bottle manufactured by the line of Figure 1.
Figure 9 is a front view of the bottle.
Figure 10 is a view of the bottle from above.

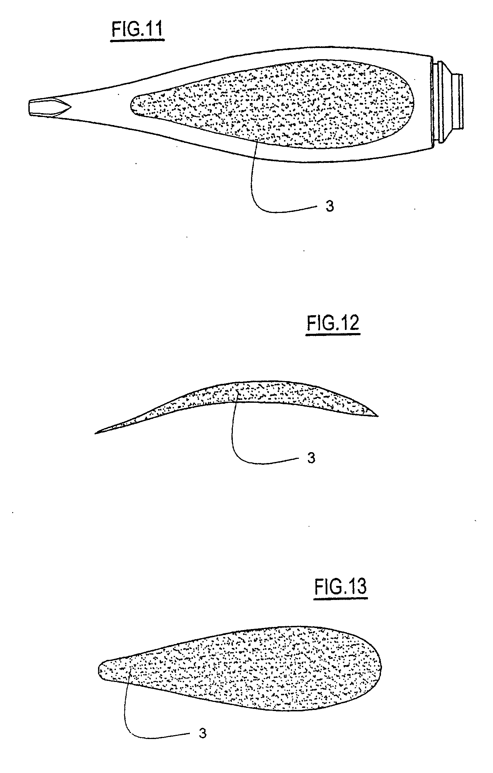

Figure 11 is a side view of the bottle.
Figures 12 and 13 show the insert to be applied to the bottle.

The process of the invention provides for creating a tube by extruding a synthetic resin chosen from the following:
Polyethylene, in its various polymer forms;
Polypropylene, in its various polymer forms;
PVC (polyvinyl chloride);

Other plastic materials without any reference to specific commercial names.

HDPE (high density polyethylene) has proved particularly convenient because of its functional characteristics.

The extrusion is preferably carried out in special machines of the type comprising an extrusion feeder screw with a distribution head for the extruded tube, usually used for manufacturing hollow bodies of thermoplastic materials in one or more layers.

The extrusion temperature is between 170°C and 220°C.

Separately, by means of an injection moulding process, an insert is formed of material having particular characteristics different from those of the bottle constituent material.

Said characteristics can be of tactile type, for example the insert can be soft to the touch and/or anti-slip, or of aesthetic type.

The insert material is preferably chosen from the following suitable materials:
Polyethylene, in its various polymer forms;
Polypropylene, in its various polymer forms;

Other plastic materials without any reference to specific commercial names.

Thermoplastic elastomeric resins can also be advantageously used, such as SANTOPRENE, manufactured by Monsanto, or similar materials of miscellaneous production and origin.

Alternatively, non-plastic materials such as glass and light metals can also be used.

If elastomers or plastic materials in general are used, the insert, manufactured separately from the tube in a different plant, is withdrawn from the injection mould and transferred into the blow mould by robotized automatic systems and suitable gripping systems.

Said automatic systems can also be used to insert inserts of different material into the mould.

More than one insert can be inserted into the same mould.

Withdrawal and transfer are carried out, according to the invention, by the robotized manipulation system described hereinafter with reference to the figures.

A forming plant will now be described by way of example, comprising an injection device with a single impression for moulding one insert at a time, however in reality a mould with several impressions is used.

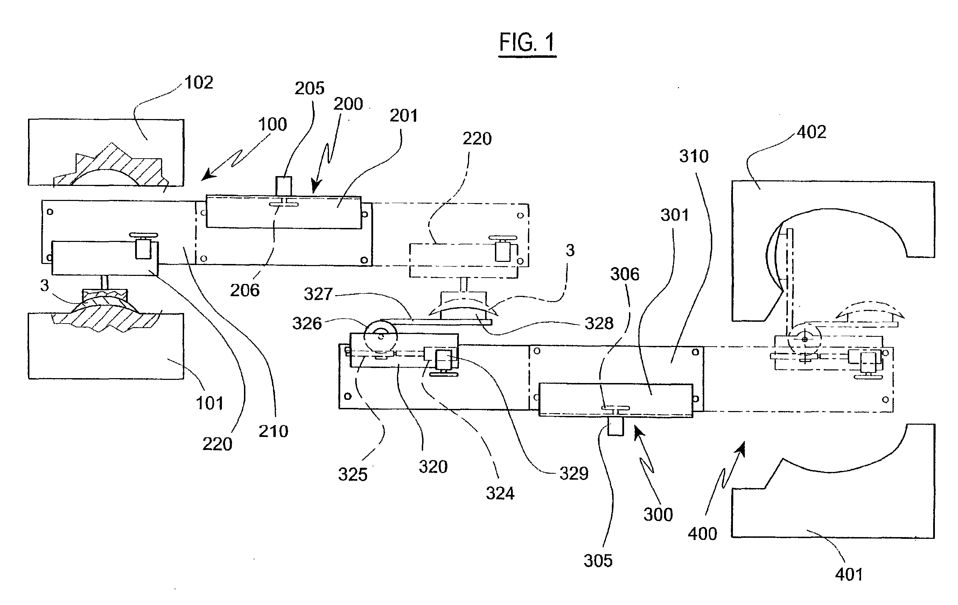

Figure 1 shows two parts 101 and 102 of an injection mould 100 for forming an insert 3 which on opening the mould remains adhering to its convex part 1a.

Withdrawal means 200 for the moulded insert are positioned to the side of the injection machine.

Said means comprise a base portion 201 which slidably supports a beam 210 on which a carriage 220 slides.

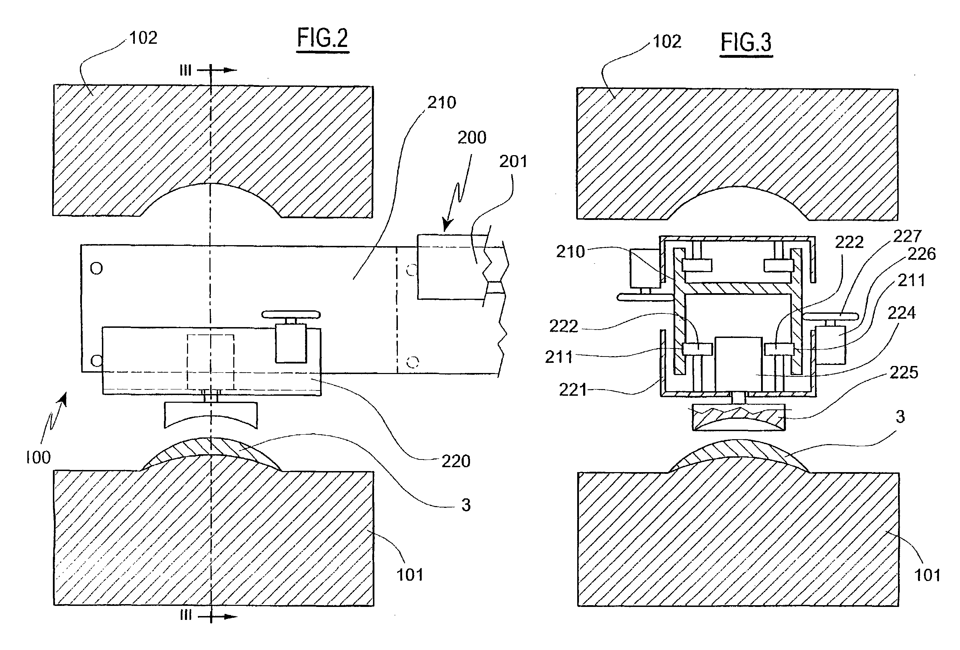

The beam 210 (see Figure 3) is an asymmetric double T beam, the major flanges of which support the slidable carriage 220, which has a shell 221 of C cross-section. The shell 221 comprises four idle rollers 222 arranged to slide in four guides 211 provided in the beam flanges.

To the shell interior there is fixed a single acting cylinder-piston unit 224, the piston rod of which passes through a hole in the shell and carries a profiled implement 225 for pneumatically receiving and retaining the insert 3.

On the outside of the shell there is fixed an electric gearmotor 226 operating a friction wheel 227 which slides along the beam 210 and drags the carriage into two positions at the ends of the beam 210.

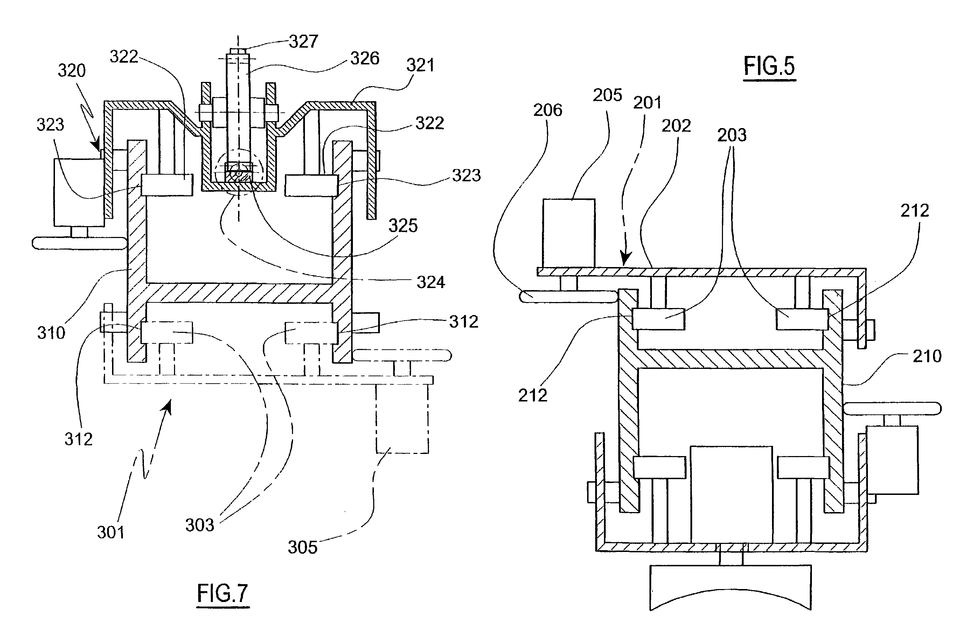

The base 201 (see Figure 5) comprises a vertical plate 202 carrying four idle rollers 203 which slide in guides 212 provided in the minor flanges of the beam 210.

The plate 202 carries an electric motor 205 of controlled advancement with, keyed onto its shaft, the friction wheel 206 which slides in contact with the lower flange of the beam 210 to drive the beam 210 with a controlled to-and-fro movement.

The extent of the movements of the beam 210 is such as to bring its left end, with reference to the figures, into a first position between the parts 101 and 102 of the mould 100, and into a second position external to the mould, to enable it to be closed.

To the side of and in continuation of the withdrawal means 200 there are provided means 300 for transferring the insert 3 into the interior of the forming head 400.

The transfer means 300 comprise a base portion 301 slidably supporting a beam 310 on which a carriage 320 slides.

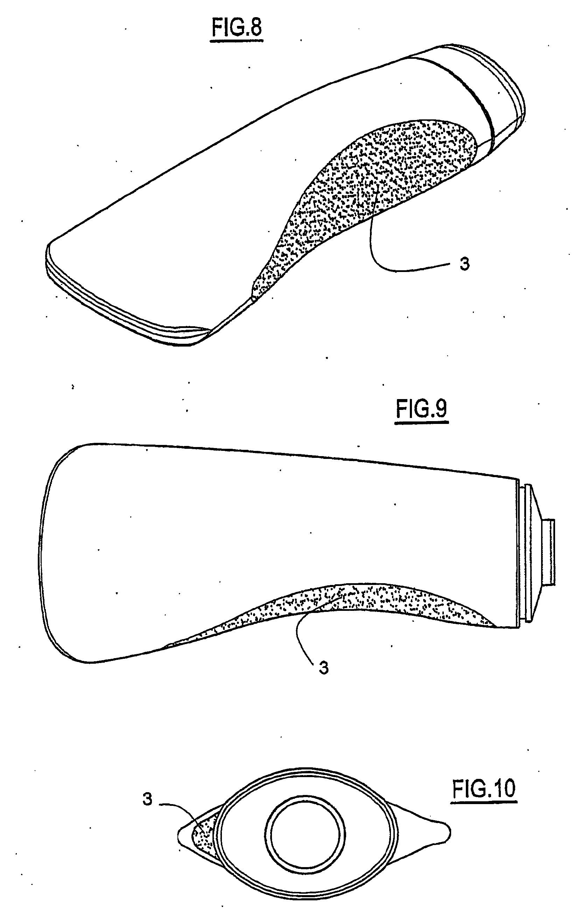

The beam 310 (see Figure 7) is an asymmetric double T beam, the major flanges of which support a slidable carriage 320 having a shell 321 of welded sheet metal. The shell 321 comprises four idle rollers 322 which slide in four guides 323 provided in the flanges of the beam 310.

To the shell interior there is fixed a pneumatic single acting cylinder-piston unit 342, the piston rod of which is coupled to a rack portion 325, which is parallel to the axis of the cylinder-piston unit and engages an idly mounted gearwheel 326.

The gearwheel 326 carries a tangential arm 327, on the end of which there is an implement 328 for collecting and pneumatically retaining the insert 3.

On the outside of the shell there is fixed an electric gearmotor 329 operating a friction wheel 330 which slides along the beam 310 and drags the carriage 320 into two positions at the ends of the beam 310.

The base 301 (see Figure 7) comprises a vertical plate 302 carrying four idle rollers 303 which slide in guides 312 provided in the minor flanges of the beam 310.

The plate 302 carries an electric motor 305 of controlled advancement with, keyed onto its shaft, the friction wheel 306 which slides in contact with the lower flange of the beam 310 to drive the beam 310 with a controlled to-and-fro movement.

The extent of the movements of the beam 310 is such as to bring its right end, with reference to the figures, into a first position between the parts 401 and 402 of the blow mould 400, and into a second position external to the mould.

The line operates in the following manner.

After the injection mould 100 has been opened, the beam 210 moves into the position shown in Figure 2, and the carriage 220 moves to the left end, with reference to the figures, of the beam 210.

In this position the implement 225 is exactly in front of the impression in the mould 100 on which the insert 3 rests and is retained.

The cylinder-piston unit 224 is operated to bring the implement into contact with the insert, which remains adhering thereto by usual suction means, not shown.

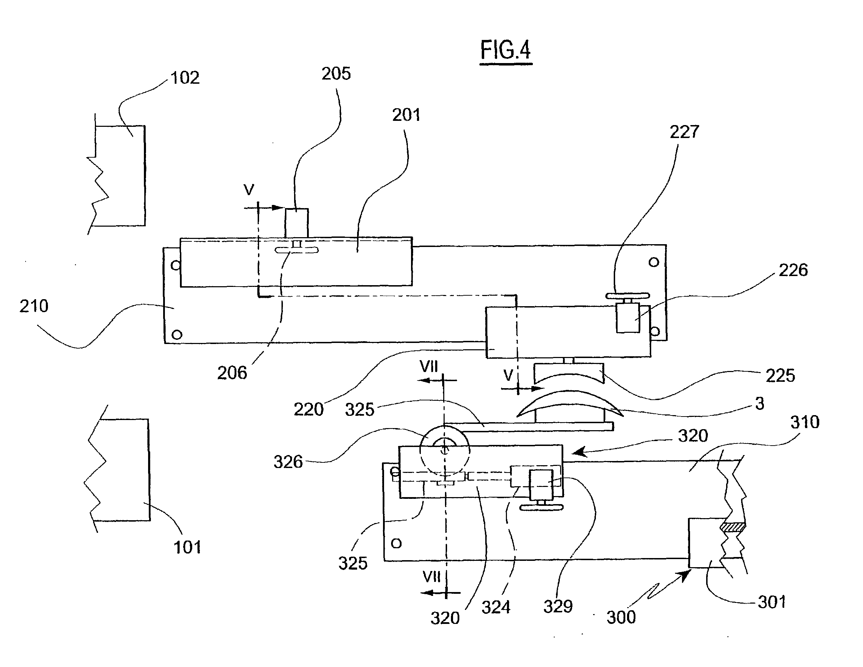

Having collected the insert, the cylinder-piston unit withdraws and the beam 210 and carriage 220 assume the position shown in Figure 4.

In this position the implement 225 is exactly in front of the implement 328 carried by the carriage 320, the cylinder-piston unit 224 then being operated to bring the insert 3 into contact with the implement 328, which retains it pneumatically by means not shown.

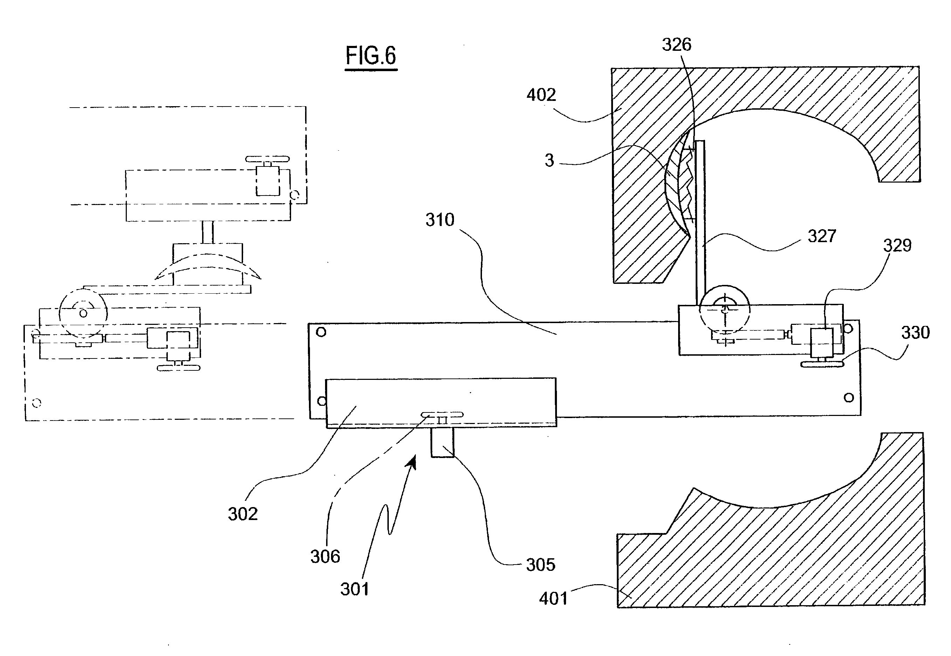

The beam 310 and carriage 320 then move completely towards the right in the figures, to bring this latter into the position shown in Figure 6, where the cylinder-piston unit 324 is operated to rotate the arm 326 until the insert 3 is deposited in the blow mould.

The extruded tube then descends, the blow mould is closed and the bottle is formed, with the insert remaining fixed thereon.

Depending on the particular arrangement and configuration of the bottle, the inserts can be also deposited on the joining or closure line of the two mould halves.

After mould closure, a blast of compressed air is fed through suitable nozzles to deform the extruded plastic tube by swelling, so that it is brought to adhere with the walls of the mould, hence incorporating the inserts which have been deposited in the mould, by adhering to their inner sides and filling the voids, and also creating those protuberances and relief decorations which give the bottle particular functional, aesthetic and tactile characteristics.

If inserts of different material are used, said process can start with the withdrawal of the inserts from appropriate containers or stores, and then proceed in the described manner.

## Claims

1. A process for manufacturing bottles having at least two components, comprising the following stages:
- creating a tube of thermoplastic synthetic material;
- creating an insert of elastomeric thermoplastic material;
- inserting the tube and insert into a blow mould, and blow-moulding the bottle.

2. A process as claimed in claim 1, **characterised in that** the tube material is chosen from the following: Polyethylene, in its various polymer forms; Polypropylene, in its various polymer forms; PVC (polyvinyl chloride).

3. A process as claimed in claim 2, **characterised in that** the tube material is HDPE.

4. A process as claimed in claim 1, **characterised in that** the insert material is chosen from the following: Polyethylene, in its various polymer forms; Polypropylene, in its various polymer forms; thermoplastic elastomers.

5. A process as claimed in claim 1, **characterised in that** the insert material is an elastomeric thermoplastic resin known as SANTOPRENE.

6. A process as claimed in claim 1, **characterised in that** the insert material is glass.

7. A process as claimed in claim 1, **characterised in that** the insert material is light metal.

8. A process as claimed in claim 1, **characterised in that** the insert is created by injection moulding.

9. A process as claimed in claim 1, **characterised in that** the insert is deposited onto the joining or closure line of the two mould halves.

10. A process as claimed in claim 1, **characterised in that** the injection temperature is between 180 and 210°C in the plastification chamber, and from 15 to 30°C higher in the hot chamber of the mould.

11. A plant for manufacturing bottles provided with at least one insert, comprising a tube extrusion line, and means for transferring the insert from the injection mould to the blow head of the extrusion line.

12. A plant as claimed in claim 11, **characterised in that** the inserts are withdrawn from suitable stores.

13. A plant as claimed in claim 11, **characterised in that** the transfer means comprise computer-controlled automatic arms to withdraw the inserts from the edge of the injection machine or from a suitable store or deposit.

14. A plant as claimed in claim 11, **characterised in that** the insert is deposited to straddle the joining line between the two mould halves.
